(19) Europäisches Patentamt
European Patent Office
Office européen des brevets

(11) Numéro de publication: **0 081 403**
**B1**

(12) # FASCICULE DE BREVET EUROPEEN

(45) Date de publication du fascicule du brevet: **19.06.85**

(51) Int. Cl.⁴: **G 21 F 9/24**

(21) Numéro de dépôt: **82402041.6**

(22) Date de dépôt: **05.11.82**

(54) **Procédé de stockage dans le sol de déchets radioactifs.**

(30) Priorité: **10.11.81 FR 8121025**

(43) Date de publication de la demande: **15.06.83 Bulletin 83/24**

(45) Mention de la délivrance du brevet: **19.06.85 Bulletin 85/25**

(84) Etats contractants désignés: **BE DE GB IT SE**

(56) Documents cités:
**FR - A - 1 243 673**
**FR - A - 1 458 501**

**DISPOSAL OF RADIOACTIVE WASTES INTO THE GROUND, Proceedings of a Symposium, Vienna 29 mai - 2 juin 1967, International Atomic Energy Agency, Vienna, AT., W.C. McClain: "Hydraulic fracturing as a waste disposal method"**

(73) Titulaire: **SOCIETE INDUSTRIELLE DE STOCKAGE ET D'ASSAINISSEMENT (S.I.S.A.), 31.33, rue de la Fédération, F-75015 Paris (FR)**
Titulaire: **PEC ENGINEERING, 62, rue Jeanne d'Arc, F-75013 Paris (FR)**
Titulaire: **SOLETANCHE Société Anonyme dite:, 6 rue de Watford, F-92005 Nanterre (FR)**

(72) Inventeur: **Cohen, Pierre, 34, rue du Bois de Boulogne, F-92200 Neuilly Sur Seine (FR)**
Inventeur: **Gouvenot, Daniel, 1, Allée Léon Gambetta, F-92110 Clichy (FR)**
Inventeur: **Pagny, Pierre, 44, Boulevard Charles de Gaulle, F-92390 Villeneuve La-Garenne (FR)**

(74) Mandataire: **Mongrédien, André et al, c/o BREVATOME 25, rue de Ponthieu, F-75008 Paris (FR)**

EP 0 081 403 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention a pour objet un procédé de stockage dans le sol de déchets radioactifs.

De façon plus précise, elle concerne l'utilisation dans un tel procédé d'un coulis spécial d'injection capable de former dans le sol une barrière imperméable à l'eau, qui présente de plus des propriétés de rétention des ions radioactifs.

Jusqu'à présent, on a stocké les déchets radioactifs dans le sol, après les avoir conditionnés de façon appropriée pour les isoler du milieu environnant. Généralement, les déchets radioactifs sont tout d'abord incorporés dans un matériau d'enrobage constitué par exemple par un liant hydraulique, du bitume, du verre, du ciment ou une résine thermodurcissable, qui permet de confiner les particules radioactives dans l'enrobage et d'éviter leur libération; ces déchets enrobés sont de plus introduits dans des récipients étanches constitués soit par des fûts métalliques, soit par des fûts en béton, puis disposés dans des cavités ménagées dans un sol qui a été choisi pour ses propriétés de sorption et d'échange d'ions afin de retenir et de fixer les ions radioactifs qui pourraient éventuellement migrer à l'extérieur du conditionnement par lixiviation. Ainsi, les déchets radioactifs sont généralement isolés du milieu environnant par trois barrières successives réalisées en des matériaux différents.

Cependant, les sols présentent généralement une certaine porosité qui se traduit par la présence de fissures au niveau desquelles la troisième barrière constituée par le sol présente une certaine discontinuité.

Aussi, pour améliorer encore les conditions de sûreté, éviter cette discontinuité et empêcher au maximum la migration des ions radioactifs dans l'eau du sol, on a envisagé, selon la présente invention, d'ajouter une barrière supplémentaire qui présente à la fois la propriété d'être imperméable à l'eau et la propriété de retenir les ions radioactifs. Cette nouvelle barrière est obtenue par injection dans les fissures du sol d'un coulis spécial qui présentera après durcissement des propriétés d'imperméabilité et de rétention des ions radioactifs et assurera la consolidation mécanique et la continuité du sol.

Selon l'invention, le procédé de stockage dans le sol de déchets radioactifs consistant à disposer dans une cavité ménagée dans le sol des déchets radioactifs conditionnés et isolés du sol par au moins une barrière de rétention se caractérise en ce que l'on injecte par pompage sous pression dans les vides de la partie du sol entourant ladite cavité un coulis comprenant:

- 1000 parties en poids d'eau,
- de 40 à 400 parties en poids de ciment,
- de 80 à 1000 parties en poids d'au moins une argile choisie dans le groupe comprenant la montmorillonite, l'illite et la vermiculite, et
- de 25 à 1200 parties en poids de kiegselghur et/ou de pouzzolanes naturelles ou artificielles.

Grâce à sa composition particulière, le coulis de l'invention présente les propriétés requises pour une utilisation dans des installations de stockage de déchets radioactifs dans le sol. En effet, le ciment confère au liant par son phénomène de prise une structure cristalline solide; les argiles naturelles permettent d'assurer, d'une part, la stabilité de la suspension de ciment en raison de leurs propriétés colloïdales et de conférer, d'autre part, au liant de fortes propriétés de rétention des ions radioactifs; enfin, les pouzzolanes et/ou le kieselguhr qui présentent une très grande surface spécifique, augmentent la capacité d'échange du matériau tout en diminuant sa perméabilité.

Par ailleurs, le coulis de l'invention présente l'avantage de conduire à un matériau dont le coefficient de conductibilité thermique est meilleur que celui du sol environnant.

Ainsi, pour le stockage d'éléments radioactifs à fort dégagement calorifique, on crée dans le sol, au voisinage du conditionnement, une voie privilégiée pour la diffusion et la conduction de la chaleur.

Selon l'invention, on injecte ce coulis spécial dans les vides de la partie du sol qui entoure les déchets radioactifs conditionnés et on forme ainsi par durcissement du coulis une barrière de sûreté qui remplit non seulement les vides du sol mais constitue, d'une part, une barrière hydraulique par obtention d'un voile relativement imperméable aux mouvements de l'eau, et d'autre part, une barrière physicochimique en raison des propriétés de rétention d'ions présentées par les argiles du coulis.

Dans certains cas, le coulis d'injection comprend de plus jusqu'à 50 parties en poids d'un ou plusiers adjuvants choisis dans le groupe comprenant les accélérateurs ou les retardateurs de prise, les activateurs de pouzzolanes, les fluidifiants et les agents défloculants. La quantité de chacun de ces adjuvants peut être de 5 à 50 parties en poids.

En effet, il est souvent nécessaire d'ajouter certains adjuvants pour adpater les paramètres rhéologiques du coulis aux caractéristiques du sol. Ainsi, on peut ajouter des adjuvants fluidifiants tels que des lignosulfonates, pyrophosphates de Na pour obtenir une viscosité optimale même lorsque la teneur en matières sèches du coulis est importante, ou ajouter d'autres adjuvants tels que carbonate de Na polymères colloïdaux pour régler les paramètres viscosité et rigidité du liant. De même, on règle le temps de prise du coulis en ajoutant jusqu'à 10 parties en poids d'un accélérateur ou d'un retardateur de prise tel que chlorure de Na lignosulfite pour obtenir le durcissement du coulis dans les meilleures conditions.

On peut encore ajouter au coulis des adjuvants permettant d'obtenir par voie chimique une défloculation des argiles, ce qui permet d'augmenter leur surface spécifique et de les rendre plus efficaces.

A titre d'agents défloculants, on peut utiliser le carbonate de sodium qui joue également le rôle d'agent activateur des pouzzolanes. Ainsi, lorsque les pouzzolanes sont constituées par des cendres volantes, le coulis comprend avantageusement du carbonate de sodium $CO_3Na_2$ en quantité telle qu'elle représente 3 à 6% du poids de cendres volantes.

Selon l'invention, les argiles utilisées sont des argiles naturelles choisies dans le groupe comprenant la montmorillonite, l'illite et la vermiculite, qui présentent de fortes propriétés de rétention des ions radioactifs. En effet, ces argiles ont une structure cristalline composée de feuillets dont l'épaisseur peut être de 7, 10 ou 14 Å. Ainsi, la montmorillonite et l'illite qui correspondent respectivement aux formules générales:

$$Si_4(Al_{2-x}R_x^{2+})O_{10}(OH)_2CE_xnH_2O$$

et

$$(Si_{(4-x)}Al_x)(Al_2)O_{10}(OH)_2K_x$$

appartiennent au groupe d'argiles dont l'épaisseur du feuillet est de 10 Å. L'analyse structurale des monocristaux fait apparaître la présence de deux couches de tétraèdres $[SiO_4]^{4-}$ appliquées de part et d'autre d'une couche d'octaèdres dont les centres sont occupés par un cation métallique. La distribution des constiuants des feuillets se présente de la façon suivante:

montmorillonite

6 O
4 Si
40, 20 H
(4 – x) Al, x Mg
40, 20 H
4 Si
6 O
x C.E. (cations échangeables)

illite

x K (cations de compensation)
6 O
(4 – x) Si, x Al
40, 20 H
4 Al
40, 20 H
(4 – x) Si, x Al
6 O
x K

Au cours des réactions d'altération des roches ou cendres éruptives, on obtient une certaine migration des cations, qui se traduit par des substitutions de $Si^{4+}$ par $Al^{3+}$ dans les couches tétraèdriques et par des substitutions de $Al^{3+}$ par $Mg^{2+}$, $Fe^{2+}$ et $Si^{+}$ dans la couche octaèdrique. Il en résulte un déficit de charge compensé par des cations échangeables, dans le cas de la montmorillonite, ou par des cations de compensation qui doivent avoir un diamètre tel qu'ils se logent exactement dans les cavités hexagonales de la couche tétraèdrique dans le cas de l'illite. Par ailleurs, la montmorillonite présente une autre particularité intéressante. En milieu aqueux, les molécules d'eau se fixent entre les feuillets qui s'écartent et provoquent ainsi un gonflement interstructural. L'augmentation du volume interfoliaire où ont lieu les échanges cationiques, conduit à une capacité élevée d'échanges dont la valeur intervient de façon prépondérante dans le calcul du coefficient de distribution des ions entre la phase solide (coulis) contenant l'argile et une phase liquide en contact avec cette phase solide.

En effet, on rappelle que le coefficient de distribution $K_d$ des ions $M_2^+$ entre une phase liquide contenant des ions $M_2^+$ et une phase solide $RM_1$ dont les ions $M_1^+$ sont échangeables, correspond au rapport:

$$K_d = \frac{(q)\ M_2}{(C)\ M_2}$$

avec q représentant la concentration en ions $M_1^+$ de la phase solide saturée en ions $M_1$ et C la concentration en ions $M_2^+$ de la phase liquide.

Entre cette phase solide saturée en ions $M_1^+$ et la phase liquide, la réaction d'échange correspond au schéma suivant:

$$(C)M_2 + (q)M_1 \rightleftharpoons (C)M_1 + (q)M_2$$

et la constante d'équilibre de cette réaction est égale à:

$$K_{M_2-M_1} = \frac{(q)\,M_2 \cdot (C)\,M_1}{(C)\,M_2 \cdot (q)\,M_1}$$

Ainsi, cette constante d'équilibre est égale à $K_d x (C)M_1/(q)M_1$ et en faisant intervenir la capacité d'échange Q du matériau qui est égale à $(q)M_1 + (q)M_2$, on obtient:

$$K_d = K_{M_2-M_1} \times \frac{Q - (q)M_2}{(C)M_1}$$

Si l'on admet, comme c'est généralement le cas pour de nombreux isotopes radioactifs, que la concentration ionique est faible, la concentration $(q)M_2$ de l'ion fixé par l'échangeur devient négligeable par rapport à $(q)M_1$ et la relation $K_d$ devient égale à:

$$K_{M_2-M_1} \frac{Q}{(C)\,M_1}$$

De ce fait, on constate que la capacité d'échange de l'échangeur a une grande influence sur le coefficient de distribution.

On peut aussi améliorer le pouvoir de rétention des argiles utilisées en augmentant le défaut de charge par saturation en ions $Al^{3+}$ ou en adaptant le pH de la phase liquide du coulis.

En effet, le pouvoir de sorption d'une montmorillonite saturée en $Al^{3+}$ vis-à-vis du strontium, est encore amélioré lorsque la phase liquide présente un caractère basique fortement prononcé par exemple, un pH d'environ 10.

Le coulis de l'invention comprend de 40 à 400 parties en poids de ciment qui confère au liant une structure cristalline solide grâce à son phénomène de prise. Le ciment utilisé est essentiellement constitué de silicates bi et tricalciques, d'aluminate tricalcique, d'une phase ferritique et de gypse. Dès que l'on ajoute de l'eau au ciment, une partie de l'aluminate tricalcique réagit avec la chaux des silicates pour donner un aluminate de calcium hydraté; ce mécanisme est freiné puis stoppé par la présence des ions sulfate du gypse qui réagissent à leur tour sur une autre partie de l'aluminate pour former un trisulfoaluminate de calcium hydraté (ettringite). Les cristaux d'ettringite se fixent à la périphérie des grains d'aluminate et d'aluminoferrite et bloquent ainsi l'hydratation. Du fait de la pression osmotique, l'enveloppe se brise après une durée de 2 à 3 heures et les réactions se poursuivent par l'hydratation des silicates tri et bicalciques, selon les schémas réactionnels:

$$2\,(SiO_2 \cdot 3\,CaO) + 6\,H_2O \rightarrow 2\,SiO_2 \cdot 3\,CaO \cdot 3\,H_2O + 3\,Ca(OH)_2$$
$$2\,(SiO_2 \cdot 2\,CaO) + 4\,H_2O \rightarrow 2\,SiO_2 \cdot 3\,CaO \cdot 3\,H_2O + Ca(OH)_2$$

tobermorite Portlandite

La prise commence au moment où se forment les microcristaux de tobermorite. La phase entre grains passe progressivement de l'état liquide à l'état solide par formation de longues fibres d'hydrate de silicate de calcium et de portlandite. Les hydrates formés étant insolubles, la présence d'eau ne perturbe pas le durcissement et la formation de monocristaux fibreux entraîne un accroîssement de la surface spécifique de 3000 $cm^2 \cdot g^{-1}$ à 1 000 000 $cm^2 \cdot g^{-1}$, ce qui explique la grande cohésion du réseau formé par durcissement du ciment.

Selon l'invention, on peut utiliser différents types de ciment, par exemple du ciment Portland, mais aussi des ciments spéciaux comportant, par exemple, une certaine quantité de laitier de haut-fourneau ou de cendres volantes comme les ciments commercialisés sous les références CPJ ou CLK.

Ainsi, on introduit simultanément dans le coulis le ciment et les pouzzolanes nécessaires.

En effet, le coulis de l'invention peut comprendre également un matériau présentant des propriétés pouzzolaniques tels que le kieselguhr ou des pouzzolanes naturelles ou artificielles. Les pouzzolanes artificielles sont constituées par exemple par des silicates spéciaux, des cendres volantes de centrales thermique ou par du laitier de haut-fourneau qui peut être inclus dans le ciment.

Les kieselguhr et les pouzzolanes naturelles ou artificielles sont des matériaux capables, en présence d'eau, de fixer l'hydroxyde de calcium pour donner naissance à des composés stables ayant des propriétés hydrauliques. Ainsi, la chaux libérée lors de l'hydratation du silicate bi et tricalcique du ciment se combine lentement à la silice et à l'alumine des cendres volantes et/ou du kieselguhr présent dans le coulis pour former des silicates et aluminates de calcium insolubles, ce qui contribue à augmenter la stabilité de l'édifice cristallin, les propriétés hydrauliques et le pouvoir de rétention du liant.

L'addition de pouzzolanes et/ou de kieselguhr permet par ailleurs d'atténuer la perméabilité de la barrière obtenue en diminuant la valeur du coefficient de perméabilité aux environs d'au moins une puissance de 10. Ainsi, on diffère le rejet des radioéléments dans la biosphère et par voie de conséquence, on peut tirer un meilleur profit du phénomène de décroissance radioactive.

En effet, selon la loi de Darcy, la vitesse V d'écoulement d'un liquide dans un corps poreux en régime permanent peut être formulée de la façon suivante: $V = Ki$ avec K représentant le coefficient de perméabilité et i le gradient de pression hydraulique. Aussi, si l'on diminue fortement la valeur du coefficient de perméabilité, on diminue dans les mêmes proportions la vitesse d'écoulement d'un liquide dans la barrière.

De plus, l'addition de pouzzolanes au coulis permet d'éviter les phénomènes de retrait, qui apparaîssent généralement lors de la solidification des coulis par libération d'alcalis car ceux-ci sont absorbés par les pouzzolanes. Grâce à la préférence de ces pouzzolanes on peut aussi réduire la quantité totale de chaux, qui est responsable de l'altération des ciments dans le temps.

En effet, le mécanisme de destruction d'un ciment par les eaux agressives est le suivant: la dissolution de la chaux du ciment entraîne la transformation des aluminates et silicates bi et tricalciques en composés monocalciques qui sont eux-mêmes hydrolysés et perdent à leur tour leur chaux. Au bout d'un certain temps, il ne reste du ciment qu'une gelée inconsistante de silice et d'alumine.

En ajoutant des pouzzolanes, on peut non seulement réduire la quantité initiale de chaux, mais utiliser de plus les propriétés particulières des pouzzolanes, c'est-à-dire leurs propriétés de donner naissance à des composés cristallisés insolubles par réaction avec la chaux, pour améliorer la stabilité dans le temps du coulis durci.

Le coulis de l'invention peut être préparé en ajoutant les différents constituants: argile, ciment, pouzzolanes et/ou kieselguhr à la quantité d'eau voulue. Généralement, on réalise ce mélange avant l'injection et on ajuste les teneurs respectives du coulis en ces différents constituants en fonction de la nature du sol où il sera injecté et des dimensions des vides à combler. En effet, le coulis doit présenter des compositions différentes selon que les vides du sol sont constitués par des fissures millimétriques, par exemple dans le cas de rochers, ou par des volumes plus importants, dans le cas de terrains constitués par des sables ou des graviers.

Dans certains cas, lorsque l'on est obligé d'augmenter fortement la teneur en matières sèches du coulis, il peut être nécessaire de lui ajouter des agents fluidifiants pour obtenir la viscosité optimale.

De même on peut ajouter au coulis, des adjuvants pour modifier les paramètres viscositérigidité afin d'obtenir des caractéristiques rhéologiques optimales pendant la durée d'utilisation du liant.

De même, dans la formulation du coulis, on règle les quantités d'argile et de ciment utilisées de façon à obtenir le module de déformabilité le plus proche possible du sol dans lequel on injectera le coulis. En effet, pour un coulis durci, l'examen de la relation contrainte-déformation fait apparaître trois domaines correspondant à des infléchissements différents de la courbe:

— déformation dans le domaine élastique,
— déformation dans le domaine plastique, et
— domaine de fluage.

Pour assurer à l'ensemble, une bonne résistance à la fissuration sous étreinte latérale, le coulis doit être utilisé dans le domaine des déformations plastiques, afin qu'il puisse se déformer sans se fissurer. Ainsi, la barrière constituée à partir de coulis présentera un facteur de résistance supplémentaire vis-à-vis des phénomènes naturels ou artificiels parasismiques tels que les secousses sismiques, les raz de marée, les mouvements de roches et l'action de pesée et de contrainte des ères de glaciation.

Selon l'invention, on règle également les teneurs des différents constituants du coulis de façon à conférer à ce dernier une stabilité satisfaisantes.

En effet, pour être utilisé dans une installation de stockage de déchets radioactifs dans le sol, le coulis doit présenter une grande stabilité de façon à obtenir, lors de l'injection, une pénétration suffisante du coulis dans les fissures du terrain, par exemple pour obtenir une barrière d'une épaisseur de 10 m qui assure ainsi une grande pérennité à l'installation de stockage.

Selon un mode préférentiel de réalisation de l'invention, on déflocule les argiles présentes dans le coulis, soit par voie mécanique, soit par voie chimique en ajoutant au mélange des adjuvants appropriés, afin d'augmenter la surface spécifique du matériau solide. Ainsi, dans le cas où les compositions contiennent des cendres volantes, on peut réaliser la défloculation de l'argile en ajoutant au coulis du carbonate de sodium $CO_3Na_2$ en quantité telle qu'elle représente 3 à 6% du poids de cendres volantes.

L'injection du coulis dans le sol se fait au moyen de dispositifs classiques par pompage sous pression. Généralement, la viscosité du coulis est adaptée pour remplir les fissures du sol sur une certaine épaisseur et on règle la pression pour obtenir ce remplissage. On détermine ensuite le nombre d'injections et les espacements nécessaires entre les différentes injections pour obtenir une barrière continue d'épaisseur voulue.

On donne ci-après à titre illustratif et non limitatif différents exemples de formulations de coulis selon l'invention.

Dans le tableau 1 ci-joint, les formulations 1 à 10 sont plus particulièrement adaptées au remplissage de fissures de petites dimensions présentes dans des rochers fissurés. En revanche, les formulations 11 à 14 du tableau 2 ci-joint sont destinées au remplissage de vides plus importants.

Dans les formulations 1 à 10, on utilise comme ciment, soit le ciment commercialisé sous la référence CPA 45, qui contient uniquement du ciment Portland, soit le ciment commercialisé sous la

référence CLK 45 qui contient 20% de ciment Portland et 80% de pouzzolanes artificielles constituées par du laitier de haut-fourneau; les argiles utilisées sont constituées par de la montmorillonite éventuellement associée à de l'illite; les formulations 1 à 7 comprennent des cendres volantes ou du kieselguhr alors que les formulations 8 à 10 comprennent simultanément des pouzzolanes et du kieselguhr.

La fluidité des coulis correspondant à ces différentes formulations, varie dans des limites raisonnables et permet d'éviter l'obtention d'un temps de prise trop long ou trop court qui gênerait l'exploitation du stockage ou serait néfaste pour l'entretien du système d'injection.

Dans les formulations 11 à 14 du tableau 2 ci-joint, on a utilisé comme ciment le produit commercialisé sous la référence CPJ qui correspond à un produit contenant 65% de ciment Portland et 35% de laitier de haut-fourneau, l'argile est de la montmorillonite associée éventuellement à de l'illite et de la vermiculite, et on ajoute des cendres volantes ou du kieselguhr à chaque formulation.

On remarque que dans le cas des formulations 11 à 14, la teneur en matières sèches est beaucoup plus importante que dans les formulations 1 à 10, ce qui rend les coulis adaptés au remplissage de volumes plus importants.

Ainsi, ces formules pourraient convenir pour le stockage de déchets radioactifs dans des sols qui jusqu'à présent n'ont pas été jugés favorables.

Tableau 1

| Constituants | Formulations 1 | 2 | 3 | 4 | 5 | 6 | 7 | 8 | 9 | 10 |
|---|---|---|---|---|---|---|---|---|---|---|
| eau ($m^3$) | 1 | 1 | 1 | 1 | 1 | 1 | 1 | 1 | 1 | 1 |
| montmorillonite (kg) | 80 | 80 | 80 | 80 | 80 | 80 | 80 | 80 | 80 | 80 |
| CPA 45 (kg) | 300 | 300 | 300 | 300 | 200 | 400 | 400 | | | |
| CLK (kg)<br>20% ciment<br>80% laitier de<br>haut-fourneau (pouzzolanes) | | | | | | | | 200 | 300 | 400 |
| cendres volantes (kg) | 400 | | 300 | | 350 | 200 | | | 200 | |
| kieselguhr (kg) | | 50 | | 50 | | | 25 | 25 | | 25 |
| illite (kg) | | | 80 | 80 | 80 | 80 | 80 | 80 | 80 | 80 |

Tableau 2

| Constituants | Formulations 11 | 12 | 13 | 14 |
|---|---|---|---|---|
| eau ($M^3$) | 1 | 1 | 1 | 1 |
| montmorillonite (kg) | 80 | 80 | 150 | 80 |
| CPJ (kg)<br>65% ciment<br>35% laitier | 500 | 500 | 500 | 500 |
| cendres volantes (kg) | 400 | 400 | 1000 | — |
| kieselguhr (kg) | — | — | — | 200 |
| illite (kg) | 900 | 600 | — | 900 |
| Vermiculite (kg) | — | 150 | — | — |

## Revendications

1. Procédé de stockage dans le sol de déchets radioactifs consistant à disposer dans une cavité ménagée dans le sol des déchets radioactifs conditionnés et isolés du sol par au moins une barrière de rétention, caractérisé en ce que l'on injecte par pompage sous pression dans les vides de la partie du sol entourant ladite cavité un coulis comprenant:

- 1000 parties en poids d'eau,
- de 40 à 400 parties en poids de ciment,
- de 80 à 1000 parties en poids d'au moins une argile choisie dans le groupe comprenant la montmorillonite, l'illite et la vermiculite, et
- de 25 à 1200 parties en poids de kieselguhr et/ou de pouzzolanes naturelles ou artificielles.

2. Procédé selon la revendication 1, caractérisé en ce que le coulis comprend jusqu'à 50 parties en poids d'un ou plusieurs adjuvants choisis dans le groupe comprenant les accélérateurs ou les retardateurs de prise, les activateurs de pouzzolanes, les fluidifiants et les agents défloculants.

3. Procédé selon l'une quelconque des revendications 1 et 2, caractérisé en ce que les pouzzolanes sont constituées au moins en partie par des cendres volantes.

4. Procédé selon la revendication 3, caractérisé en ce que le coulis comprend du carbonate de sodium en quantité telle qu'elle représente 3 à 6% du poids de cendres volantes.

## Patentansprüche

1. Verfahren zur unterirdischen Lagerung von radioaktiven Abfallstoffen, bei dem man in einen unterirdischen Hohlraum konditionierte und mittels einer Retentionssperre gegenüber dem Erdboden isolierte radioaktive Abfälle einbringt, dadurch gekennzeichnet, daß man in die Lehrräume des Erdbodenabschnitts, der den Hohlraum umgibt, durch Pumpen unter Druck eine Flüssigkeit einspritzt, die enthält:

- 1000 Gew.-Teile Wasser,
- 40 bis 400 Gew.-Teile Zement,
- 80 bis 1000 Gew.-Teile mindestens einer Tonerde, ausgewählt aus der Gruppe Montmorillonit, Illit und Vermiculit, und
- 25 bis 1200 Gew.-Teile Kieselgur und/oder natürlicher oder künstlicher Puzzolane.

2. Verfahren nach Anspruch 1, dadurch gekennzeichnet, daß die Flüssigkeit bis zu 50 Gew.-Teile eines oder mehrerer Adjuvantien enthält, die ausgewählt werden aus der Gruppe der Abbindebeschleuniger oder -verzögerer, der Puzzolanaktivatoren, der Fluidisierungsmittel und der Ausflockungsmittel.

3. Verfahren nach einem der Ansprüche 1 und 2, dadurch gekennzeichnet, daß die Pozzulane mindestens zum Teil aus Flugasche bestehen.

4. Verfahren nach Anspruch 3, dadurch gekennzeichnet, daß die Flüssigkeit Natriumcarbonat in einer solchen Menge enthält, daß sie 3 bis 6 Gew.-% Flugaschen darstellt.

## Claims

1. Process for the subterranean storage of radioactive waste, comprising locating within a subterranean cavity treated radioactive waste isolated from the ground by at least one confinement barrier, characterized in that a flowable composition is pumped under pressure into voids in the ground surrounding said cavity, said flowable composition comprising:

- 1000 parts by weight of water,
- 40 to 400 parts by weight of cement,
- from 80 to 1000 parts by weight of at least one clay selected from the group comprising montmorillonite, illite and vermiculite, and
- from 25 to 1200 parts by weight of kieselguhr and/or natural or artificial pozzolana.

2. Process according to Claim 1, characterized in that the flowable composition comprises up to 50 parts by weight of one or more adjuvants selected from the group comprising setting accelerators or retarding agents, pozzolana-activators, fluidizing agents and deflocculating agents.

3. Process according to either of Claims 1 and 2, characterized in that the pozzolana at least partially comprises fly ash.

4. Process according to Claim 3, characterized in that the flowable composition comprises sodium carbonate in an amount of 3 to 6% by weight, based on fly ash.